# EUROPEAN PATENT SPECIFICATION

(11) **EP 1 740 846 B1**
(45) Date of publication and mention of the grant of the patent: **10.12.2008**
(21) Application number: 04730626.1
(22) Date of filing: 30.04.2004
(51) Int. Cl.: F16D 66/02, F16D 66/00

(54) **PROBE OF WEAR-INDICATOR FOR BRAKE PADS**
FÜHLER FÜR VERSCHLEISSANZEIGE FÜR BREMSBELÄGE
SONDE POUR INDICATEUR D'USURE DE PLAQUETTE DE FREIN

(43) Date of publication of application: 10.01.2007
(73) Proprietor: Freni Brembo S.p.A., 24035 Curno (Bergamo) (IT)
(72) Inventor: CANOVA, Walter, I-24010 Sorisole (Bergamo) (IT); BOSIS, Alberto, I-24068 Seriate (Bergamo) (IT)
(74) Representative: Crippa, Paolo Ernesto
(86) International application number: PCT/IT2004/000238
(87) International publication number: WO 2005/106280

(56) References cited:
- EP-A- 0 594 515
- EP-A- 0 634 586
- EP-A- 0 916 868
- DE-A- 4 120 527
- DE-C- 3 204 305
- GB-A- 2 115 893

## Description

. The subject of the present invention is a probe for an indicator of wear of the friction material fitted to the pads of a brake, particularly to the pads of a disc brake. Such a probe is for instance known from GB-A-2 115 893.

. With reference to vehicles equipped with brakes, for example disc brakes, there is a particularly important requirement for the user to have available an indicator of the state of wear of the brake pad friction material.

. For this purpose, indicators comprising a probe and an indicator circuit are commonly used. The probe generally comprises a block having an aperture through it, within which a conductor wire is housed. The probe is housed in a recess made in the pad plate and in such a way that the wire is turned towards the brake disc. When the friction material of the pad fitted to the plate is consumed beyond a predetermined limit, the block of the probe also begins to be exposed to wear. In turn, the block, in becoming consumed, exposes the conductor wire to wear. When the conductor wire has worn until it breaks, a circuit is opened and this generates a warning signal directed to the user of the vehicle, relating to the state of wear of the brake pads.

. As is known, however, indicators of the type outlined above are not free from disadvantages. For example, it is impossible for construction of the probe and its components to be completely automated. This is because the construction provides for the steps of cutting the conductor wire to the desired length, removing the insulating material from the ends of the wire, inserting the wire into the block having an aperture through it, crimping the terminals to the ends of the wire and moulding the connector which encases the terminals. The operation of inserting the conductor wire axially into the aperture in the block which constitutes its seating necessarily requires that the terminals should not yet have been crimped to the ends of the wire. Because this operation is rather complex, it is necessary to make provision for it to be carried out manually, interrupting an otherwise automated cycle, with an obvious increase in time and cost.

. From what has been stated above, it is clearly an important requirement to have an indicator of the state of brake pad wear which overcomes the disadvantages of the known technology.

. What is required is an indicator of the state of wear of the brake pads which can be easily produced in an automated manner. Specifically, there is a requirement for a probe the assembly of which does not require the conductor wire to be threaded into its seating by means of a movement along the axis of the seating.

. There is also a requirement that this indicator should ensure that the conductor wire does not come out of its seating and that consequently it wears at the same rate as the friction material surrounding it.

. The purpose of the present invention is to devise and make available an indicator of the state of wear of brake pads and an associated probe which meet the above-mentioned requirements and at the same time eliminate the disadvantages of the known technology.

. This purpose is achieved by means of an indicator of the state of wear of brake pads according to claim 1 and by means of an indicator according to claim 6.

. Other characteristics and advantages of the invention will become clear from the following description of a preferred example of embodiment, provided purely by way of non-limiting example with reference to the appended drawings, in which:

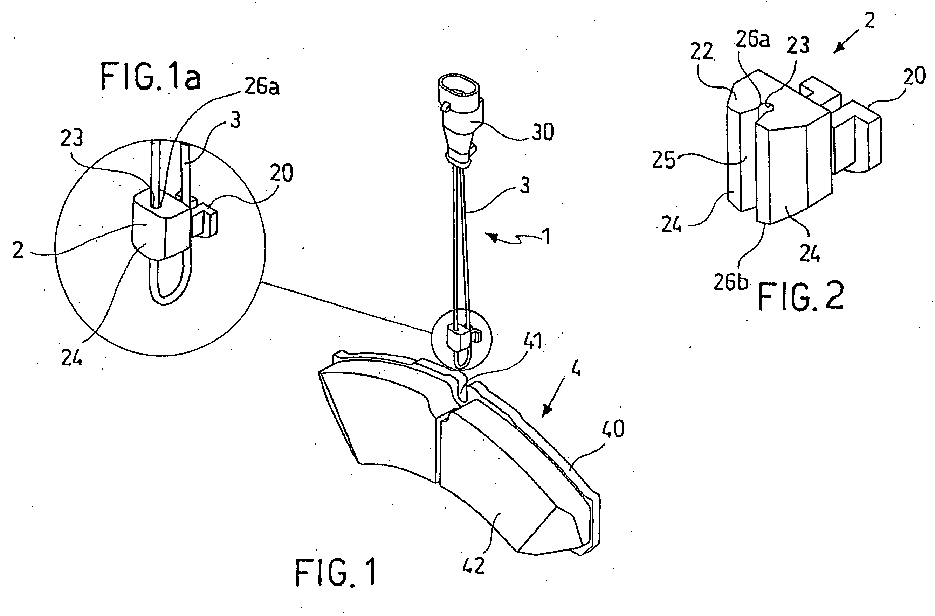

. - figure 1 shows in isometric projection a probe of a wear-indicator of the known type and a brake pad on which it may be mounted;

. - figure 1a shows a detail of figure 1;

. - figure 2 shows in isometric projection a detail of the probe of the indicator according to the invention;

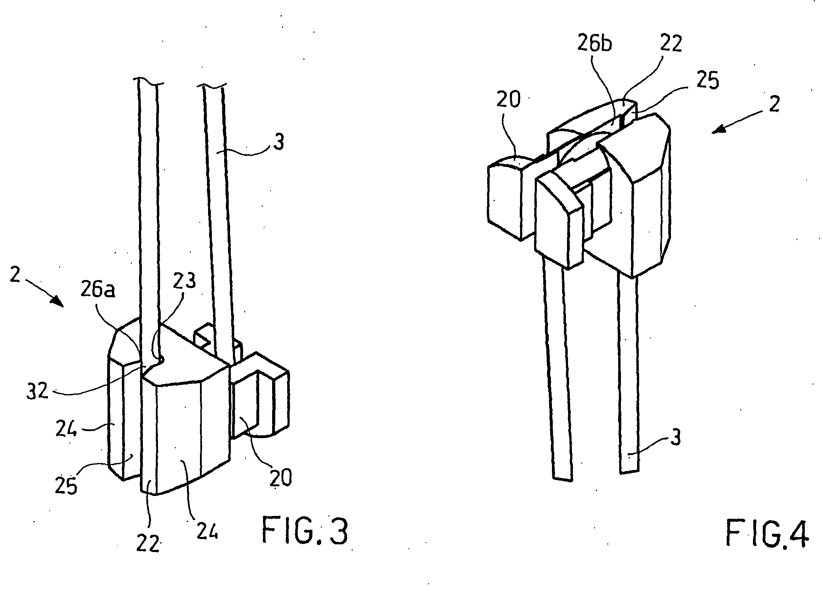

. - figure 3 shows in isometric projection another detail of the probe of the indicator according to the invention;

. - figure 4 shows in isometric projection the detail in figure 3 inverted and reversed compared with figure 3;

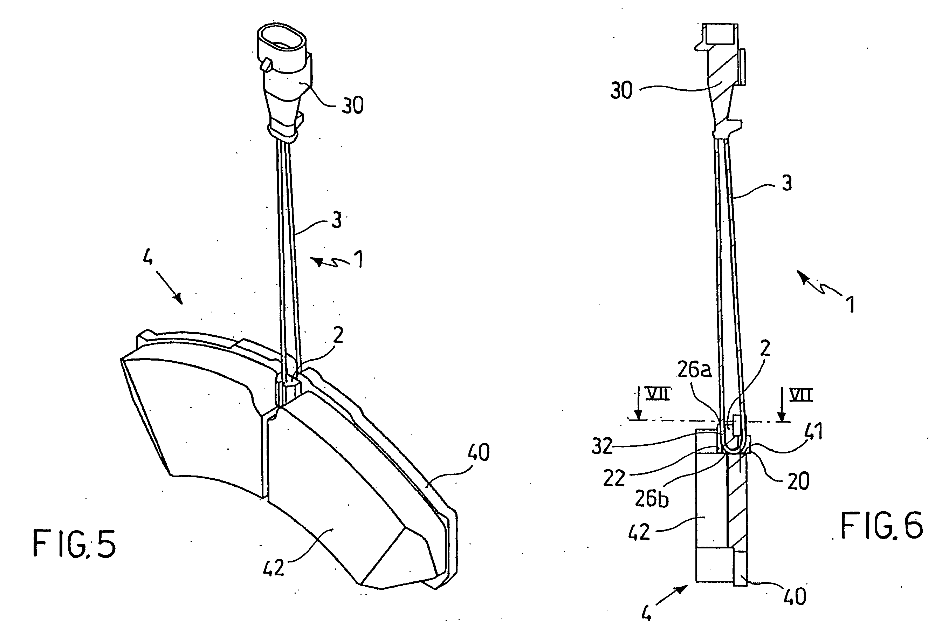

. - figure 5 shows in isometric projection a probe according to the invention mounted on a brake pad;

. - figure 6 shows a section along the plane of symmetry in figure 5;

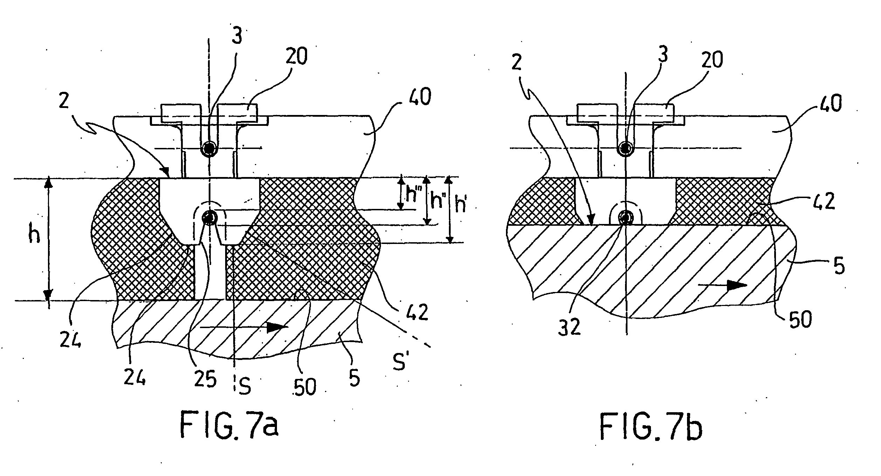

. - figure 7a shows in section along the plane VII-VII in figure 6 a probe according to the invention in a first operating configuration;

. - figure 7b shows in section along the plane VII-VII in figure 6 a probe according to the invention in a second operating configuration;

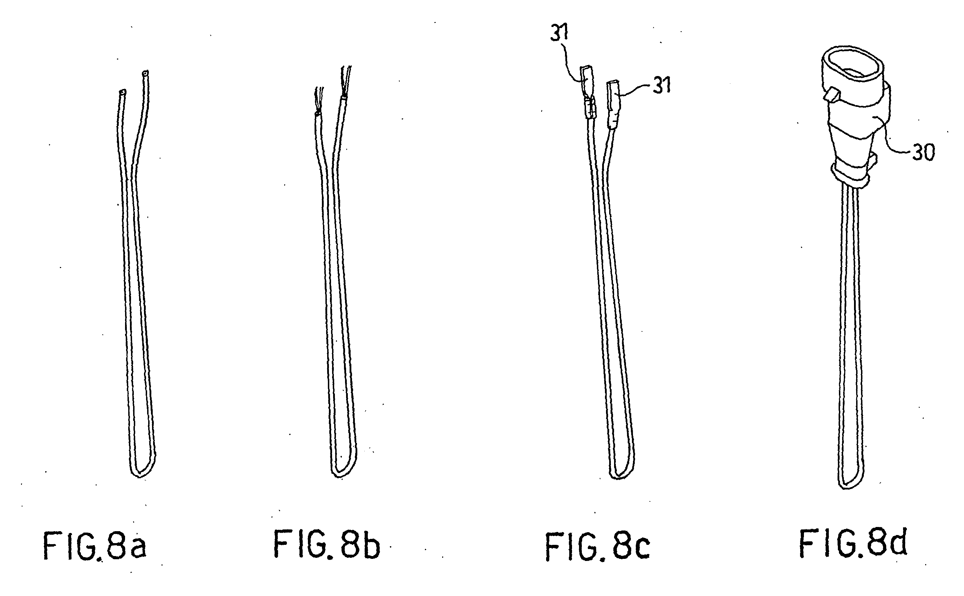

. - figures 8a to 8d show four successive steps in the method of producing a probe.

. With reference to the above-mentioned drawings, the number 1 indicates as a whole a probe for an indicator of wear of the friction material of the pads of a brake.

. The probe 1 comprises a block 2 and a conductor 3 which will be described in what follows.

. In turn, the block 2 comprises an engagement portion 20 and a wear portion 22 opposite the engagement portion 20. The engagement portion 20 is capable of being inserted into a recess 41 and remaining firmly housed in it until an operator takes deliberate action to remove it.

. The recess 41 is typically made in a plate 40 of a brake disc 4.

. The block 2 is produced in such a way that, once the engagement portion 20 is inserted into the recess 41, the wear portion 22 is surrounded by the friction material 42 of the pad 4.

. The wear portion 22 in turn comprises one or more wear surfaces 24 facing towards the friction face 50 of the brake. In other words, the wear surfaces 24 are arranged in such a way that a half-line (for example s or s' in figure 7a) coming out perpendicularly from them meets the surface of the friction face 50.

. Inside the wear portion 22 there is a seating 23 shaped so that it can contain a wear segment 32 of the conductor 3 described in what follows.

. The seating 23 forms a path into which the wear segment 32 of the conductor 3 must fit. This path may be characterised conventionally as having an entrance 26a and an exit 26b opposite to it.

. The wear portion 22 also comprises a groove 25 providing access to the seating 23 and connecting the entrance 26a to the exit 26b.

. This groove 25 is formed in such a way as to allow the wear segment 32 to be in inserted into the associated seating 23 by means of a movement in a transverse direction relative to the seating 23.

. In accordance with a preferred form of embodiment, this groove 25 opens onto the wear surface 24.

. The block 2 is preferably produced from a polymer material of the polyimide type (for example Meldin^{®} 7001 marketed by Saint-Gobain^{®}) capable of maintaining its own mechanical characteristics even at the high operating temperatures which are typically reached by the pad 4 during the braking action.

. The conductor 3 comprises means for electrical connection to an indicator circuit and a wear segment 32.

. In accordance with a preferred form of embodiment, the means for electrical connection comprise a connector 30 of known type.

. The wear segment 32 on the contrary is a length of the conductor 3 which provides electrical continuity of the circuit and which is designed to be exposed to wear together with the wear portion 22 of the block 2 within which the seating 23 is made and together with the friction material 42 which surrounds the wear portion 22.

. From the above description, it will be clear how the type of probe according to the invention allows production to be automated completely. The reason is that it is no longer necessary to insert the conductor wire axially into the aperture in the block which constitutes the seating of the wire.

. To produce such a probe , provision is made first of all for the steps of cutting the conductor 3 to the desired length (figure 8a), removing the insulating material from the ends of the conductor (figure 8b) and crimping the terminals 31 to these ends (figure 8c). These operations may be carried out in a continuous sequence, without the need for any manual intervention. After this, provision may be made for the step of moulding the connector 30 which encases the terminals 31 (figure 8d).

. Finally, the conductor 3 can be inserted into its seating 23 inside the block 2, despite the presence of the terminals and the connector 30.

. In what follows, a description is given of the operation of a probe for an indicator of wear of the friction material fitted to the pads of a brake in accordance with the present invention.

. The probe 1 in accordance with the invention is inserted into the recess 41 made in the plate 40 of a pad 4. In this way, the wear portion 22 of the block 2 is sunk in the friction material 42 of the pad 4.

. The braking action applied by the friction material 42 to the friction face 50, for example of a brake disc 5, causes wear of the friction material and consequent reduction in its thickness h.

. Upon reaching a first predetermined level of wear of the friction material (h' in figure 7a), the wear surface 24 facing towards the friction face 50 begins to come into contact with it.

. From this time onwards, any further wear of the friction material 42 involves simultaneous wear of the wear portion 22 of the block 2 of the probe 1.

. Upon reaching a second predetermined level of wear of the friction material (h" in figure 7a), the wear segment 32 of the conductor 3 begins to come into contact with the friction face 50.

. From this time onwards, any further wear of the friction material 42 involves simultaneous wear of the wear segment 32 of the conductor 3 of the probe 1.

. Upon reaching a third predetermined level of wear of the friction material (h'" in figure 7a), the wear segment 32 of the conductor 3 breaks or in any case is no longer capable of ensuring the electrical continuity of the indicator circuit.

. When the electrical continuity which was ensured by the integrity of the conductor 3 fails, the indicator circuit generates a warning signal directed to the user of the vehicle and regarding the state of wear of the brake pads.

. Determination of the three successive levels h', h" and h'" of wear of the friction material 42 may vary depending on specific requirements. In accordance with a preferred form of embodiment, the third wear level which determines the generation of the warning signal will be determined so as to reconcile the opposing requirements of utilising the full thickness of the friction material 42 and allowing a remaining mileage such as to ensure that the vehicle can be driven safely to a maintenance facility.

. From what has been stated above, it will be clear how the present invention overcomes the disadvantages of the state of the art.

. In particular it will be clear how the present invention entirely meets the requirements of obtaining a probe which can be easily assembled in an automated manner.

. Moreover, the probe 1 according to the invention ensures that there is no possibility of the conductor 3 escaping from the seating 23 and that it remains intact independently of the level of wear of the friction material 42.

. Clearly, provision may be made for variants and/or additions to what has been described and illustrated above. For example, provision may be made for a different method of attaching the block 2 to the plate 40 of the pad 4. Or again, a different embodiment of the conductor 3 may be preferred, for example in the form of a metal strip or a portion of another conducting material. Finally, the connection of the probe 1 to the indicator circuit may be produced by any means suitable for providing electrical continuity of the circuit and considered adequate for the specific requirements.

. Persons skilled in the art, for the purpose of meeting incidental and specific requirements, will be able to make numerous changes, adaptations and substitutions of components with other functionally equivalent ones without thereby departing from the scope of the following claims.

## Claims

1. A probe (1) for an indicator of wear of the friction material (42) of the pads (4) of a brake having a brake disc (5), comprising:
- a conductor (3), capable of being connected to an indicator circuit, and having a straight wear segment (32); and
- a block (2) having an engagement portion (20) capable of being fitted to a brake pad (4); a wear portion (22), capable of facing towards a friction face (50) of said brake disc (5); and a seating (23) made in said wear portion (22), said seating forming a path comprising an entrance (26a) and an exit (26b), said seating being formed in such a way that, in use, it contains said straight wear segment (32) of said conductor (3) in a predetermined radial direction with respect to the brake disc (5) ;
in which said wear portion (22) comprises a groove (25) giving access to the seating (23), said groove connecting said entrance (26a) to said exit (26b) ; **characterised in that**
said engagement portion (20) comprises a second seating which contains a portion of said conductor (3) different from said wear segment (32).

2. A probe (1) according to claim 1 in which said wear portion (22) comprises at least one wear surface (24) facing towards said friction face (50) of said brake (5).

3. A probe (1) according to claim 2 in which said groove (25) giving access to the seating (23) opens onto said wear surface (24).

4. A probe (1) according to claim 1 also comprising means (30) for electrical connection to an indicator circuit.

5. A probe (1) according to claim 4 in which said means comprise a connector (30).

6. An indicator of wear of the friction material of the pads of a brake, comprising a probe according to any one of claims 1 to 5.

7. A probe (1) according to claim 1 in which the cross section of said groove (25) is tapered towards said seating (23) and in which the minimum width of said groove (25) is smaller than the inner diameter of said seating (23).

8. A probe (1) according to claim 1 in which engagement portion (20) is capable of being radially inserted into a recess (41) made in the plate (40) of the brake pad (4).

9. An indicator of wear of the friction material of the pads of a brake, comprising a probe according to any one of claims 8 to 10.

## Patentansprüche

1. Sonde (1) für einen Anzeiger des Verschleißes des Reibmaterials (42) der Klötze (4) einer Bremse, die eine Bremsscheibe (5) aufweist, umfassend:
- einen Leiter (3), der mit einem Anzeigerschaltkreis verbunden werden kann und ein gerades Verschleißsegment (32) aufweist; und
- einen Block (2) mit einem Eingriffsabschnitt (20), der in einen Bremsklotz (4) eingepasst werden kann; einen Verschleißabschnitt (22), der einer Reibfläche (50) der Bremsscheibe (5) zugewandt sein kann; und eine Aufnahme (23), die im Verschleißabschnitt (22) gebildet ist, wobei die Aufnahme eine Weg bildet, der einen Eingang (26a) und einen Ausgang (26b) bildet, wobei die Aufnahme derart gebildet ist, dass sie bei Verwerdung das gerade Verschleißsegment (32) des Leiters (3) in einer vorbestimmten radialen Richtung in Bezug auf die Bremsscheibe (5) enthält;
bei dem der Verschleißabschnitt (22) eine Nut (25) aufweist, die Zugriff auf die Aufnahme (23) ermöglicht, wobei die Nut mit dem Eingang (26a) und dem Ausgang (26b) verbunden ist;
**dadurch gekennzeichnet, dass** der Eingriffsabschnitt (20) eine zweite Aufnahme umfasst, die einen Abschnitt des Leiters (3) enthält, der sich von dem Verschleißsegment (32) unterscheidet.

2. Sonde (1) nach Anspruch 1, bei der der Verschleißabschnitt (22) wenigstens eine Verschleißfläche (24) aufweist, die einer Reibfläche (50) der Bremse (5) zugewandt ist.

3. Sonde (1) nach Anspruch 2, bei der die Nut (25), die Zugriff auf die Aufnahme (23) ermöglicht, sich auf die Verschleißfläche (24) hin öffnet.

4. Sonde (1) nach Anspruch 1, weiter umfassend ein Mittel (30) zum elektrischen Verbinden mit einem Anzeigerschaltkreis.

5. Sonde (1) nach Anspruch 4, bei der das Mittelt einen Verbinder (30) umfasst.

6. Anzeiger des Verschleißes des Reibmaterials der Klötze einer Bremse, umfassend eine Sonde nach einem der Anspruche 1 bis 5.

7. Sonde (1) nach Anspruch 1, bei der der Querschnitt der Nut (25) sich auf die Aufnahme (23) zu verjüngt und bei der die Minimalbreite der Nut (25) kleiner als der Innendurchmesser der Aufnahme (23) ist.

8. Sonde (1) nach Anspruch 1, bei der der Eingriffsabschnitt (20) in eine Vertiefung (41) radial eingesetzt werden kann, die in der Platte (40) des Bremsklotzes (4) gebildet ist.

9. Anzeiger des Verschleißes des Reibmaterials der Klötze einer Bremse, umfassend eine Sonde nach einem der Ansprüche 8 bis 10.

## Revendications

1. Sonde (1) pour un indicateur d'usure du matériau de frottement (42) des plaquettes (4) d'un frein comportant un disque de frein (5), comprenant :
- un conducteur (3), capable d'être connecté à un circuit d'indicateur, et comportant un segment d'usure droit (32) ; et
- un bloc (2) comportant une partie de mise en prise (20) capable d'être montée sur une plaquette de frein (4) ; une partie d'usure (22), capable d'être orientée vers une face de frottement (50) dudit disque de frein (5) ; et un siège (23) réalisé dans ladite partie d'usure (22), ledit siège formant un trajet comprenant une entrée (26a) et une sortie (26b), ledit siège étant formé de sorte que, en utilisation, il contient ledit segment d'usure droit (32) dudit conducteur (3) dans une direction radiale prédéterminée par rapport au disque de frein (5) ;
dans laquelle ladite partie d'usure (22) comprend une rainure (25) donnant accès au siège (23), ladite rainure reliant ladite entrée (26a) à ladite sortie (26b) ; **caractérisée en ce que**
ladite partie de mise en prise (20) comprend un deuxième siège qui contient une partie dudit conducteur (3) différente dudit segment d'usure (32).

2. Sonde (1) selon la revendication 1, dans laquelle ladite partie d'usure (22) comprend au moins une surface d'usure (24) orientée vers ladite face de flottement (50) dudit frein (5).

3. Sonde (1) selon la revendication 2, dans laquelle ladite rainure (25) donnant accès au siège (23) s'ouvre sur ladite surface d'usure (24).

4. Sonde (1) selon la revendication 1, comprenant également des moyens (30) pour une connexion électrique à un circuit d'indicateur.

5. Sonde (1) selon la revendication 4, dans laquelle lesdits moyens comprennent un connecteur (30).

6. Indicateur d'usure du matériau de frottement des plaquettes d'un frein, comprenant une sonde selon l'une quelconque des revendications 1 à 5.

7. Sonde (1) selon la revendication 1, dans laquelle la section transversale de ladite rainure (25) diminue vers ledit siège (23), et dans laquelle la largeur minimum de ladite rainure (25) est inférieure au diamètre interne dudit siège (23).

8. Sonde (1) selon la revendication 1, dans laquelle la partie de mise en prise (20) est capable d'être insérée radicalement dans un évidement (41) réalisé dans la plaque (40) de la plaquette de frein (4).

9. Indicateur d'usure du matériau de frottement des plaquettes d'un frein, comprenant une sonde selon l'une quelconque des revendications 8 à 10.
